# EUROPÄISCHE PATENTANMELDUNG

(11) **EP 3 144 756 A1**
(43) Veröffentlichungstag der Anmeldung: **22.03.2017**
(21) Anmeldenummer: 15185929.5
(22) Anmeldetag: 18.09.2015
(51) Int. Cl.: G05B 19/4069, G05B 17/02, G05B 23/02

(54) **STEUERUNGSSYSTEM SOWIE VERFAHREN ZUM BETRIEB EINES STEUERUNGSSYSTEMS MIT EINER REALEN UND EINER VIRTUELLEN STEUERUNG ZUR REDUZIERUNG VON AUSFALLZEITEN**

(71) Anmelder: Siemens Aktiengesellschaft, 80333 München (DE)
(72) Erfinder: Amthor, Karl-Josef, 82229 Seefeld (DE); Seeger, Guido, 91083 Baiersdorf (DE)

(57) **Zusammenfassung**

Steuerungssystem sowie Verfahren zum Betrieb eines Steuerungssystems mit einer realen und einer virtuellen Steuerung zur Reduzierung von Ausfallzeiten

Bei einem Steuerungssystem (1, 3) mit einer realen Steuerung (1) zur Steuerung eines industriellen Prozesses, einer Anlage oder einer Maschine und mit einer virtuellen Steuerung (3) zur Simulation der Steuerung des industriellen Prozesses, der Anlage oder der Maschine soll nach einem Ausfall oder einer Störung der realen Steuerung (1) der ordnungsgemäßen Betrieb der industriellen Anlage oder Maschine schnell und zuverlässig wieder aufgenommen werden können.

Erfindungsgemäß werden hierfür Speichermittel (6) zum Speichern von Speicherinhalten und/oder Systemzuständen der virtuellen Steuerung (3) sowie Mittel zum Übertragen der zwischengespeicherten Speicherinhalte und/oder Systemzustände zu der ersten (1) oder einer weiteren realen Steuerung (1') vorgeschlagen, um mit den übertragenen Speicherinhalten die erste reale Steuerung (1) nach einer Reparatur oder die weitere realen Steuerung (1') als Ersatz für die erste reale Steuerung (1) zu betreiben.

## Beschreibung

Die Erfindung betrifft ein Steuerungssystem, umfassend eine erste reale Steuerung zur Steuerung eines industriellen Prozesses, einer Anlage oder einer Maschine, eine virtuelle Steuerung zur Simulation der Steuerung des industriellen Prozesses, der Anlage oder der Maschine sowie Synchronisationsmittel zur Synchronisation der ersten realen Steuerung und der virtuellen Steuerung. Ferner betrifft die Erfindung ein Verfahren zum Betrieb eines derartigen Steuerungssystems.

An Steuerungen für industrielle Anlagen oder Maschinen (Werkzeugmaschinen, Produktionsmaschinen, Roboter etc) werden hohe Anforderungen gestellt. Beispielsweise müssen bei der Produktion von Werkstücken mit Hilfe von numerisch gesteuerten Werkzeugmaschinen Werkstücke mit einer definierten Qualität in möglichst kurzer Zeit produziert werden. Ausfallzeiten, z.B. durch Verschleiß, Ausfall, Beschädigung von Maschinenkomponenten oder Werkzeugen, müssen vermieden werden.

Besonders kritisch ist dabei der Ausfall der Maschinensteuerung selbst, da in diesem Fall oft das "Gedächtnis" der Steuerung, das den letzten Maschinenzustand spiegelt, beschädigt ist oder sogar beim Austausch völlig verloren geht. Wenn es nicht mehr möglich ist, das Gedächtnis aus der defekten Steuerung auszulesen oder einen das Gedächtnis enthaltenden Speicher zu entnehmen, können die Werte nicht auf eine Ersatzsteuerung übertragen werden. Die Ersatzsteuerung weiß dann nichts darüber, in welchem Zustand sich die Maschine beim Ausfall der Steuerung befunden hat. Ersatzsteuerung und Maschine müssen dann erst wieder synchronisiert werden, was ein zeitaufwendiger Vorgang sein kann. Bis die Synchronisation abgeschlossen ist, steht die Maschine für die Produktion nicht zur Verfügung. Passieren Fehler bei der Synchronisation, beispielsweise weil das Personal unter hohem Zeitdruck arbeiten muss, kann es auch anschließend noch zu weiteren Störungen kommen.

Bei einem Ausfall der Steuerung ist es üblich, die Maschine in einen Referenzzustand zu bringen, der speziell für solche Situationen definiert wurde. Die Daten zu diesem Referenzzustand werden dann in die Ersatzsteuerung geladen, so dass mechanischer Zustand und Gedächtnis wieder synchron sind. Abhängig von der mechanischen Komplexität der Maschine kann ein solcher Vorgang durchaus mehrere Stunden dauern, insbesondere wenn sehr viele einzeln bewegliche Teile in der Maschine sind, z.B. sehr viele und obendrein unterschiedliche Werkzeuge. Es kann sein, dass jedes einzelne "bearbeitet" werden muss, um in den mechanischen Referenzzustand zu kommen.

Ein anderer Ansatz beruht darauf, sämtliche für den Zustand der Maschine relevanten Informationen bzw. Daten, also das gesamte Gedächtnis, auf separat betreibbare Datenträger zu speichern, die nach einem Ausfall der Steuerung auf eine Ersatzsteuerung übertragen werden können. Unter den dafür notwendigen Steckverbindungen leiden jedoch die Zuverlässigkeit und auch die realisierbare Speicher-Zugriffsgeschwindigkeit. Es ist auch schwer, diese Verbindungen über einen langen Zeitraum kompatibel bereitzustellen, da sich die jeweils am besten geeignete Technologie relativ schnell ändert und ein langfristig kompatibles Interface dadurch relativ hohe Kosten verursachen kann. Zudem wird die Steuerungssoftware immer komplexer, so dass sich in der Praxis die relevanten Zustände meist auf alle vorhandenen Speicher verteilen, auch auf die notwendigerweise fest eingebauten. Ferner gibt es erfahrungsgemäß Ausfallszenarien, in denen die relevanten Zustände zum Ausfallzeitpunkt nur im flüchtigen Hauptspeicher vorhanden sind und gar nicht mehr auf umsteckbare Speicher gerettet werden können.

Aus Kief "CNC-Handuch" 2013/2014; Teil 5, Kap 4 "Fertigungs-Simulation" sind die Simulation einer Steuerung und einer Maschine mittels einer so genannten virtuellen Steuerung und einer virtuellen Maschine bekannt.

Aus der EP1932618B1 ist die Beobachtung des Arbeitsraumes einer Werkzeugmaschine mittels einer Kamera bekannt, wobei das Kamerabild auf einem Bildschirm angezeigt wird, wobei zeitsynchron mit der realen Bearbeitung eines Werkstücks in der Werkzeugmaschine eine Simulation der Bearbeitung gerechnet wird und wobei zwischen dem Kamerabild und einem durch die Simulation erzeugten virtuellen Bild umgeschaltet werden kann.

Aufgabe der Erfindung ist es, nach einem Ausfall oder einer Störung den ordnungsgemäßen Betrieb einer industriellen Anlage oder Maschine schnell und zuverlässig wieder aufnehmen zu können.

Diese Aufgabe wird durch ein Steuerungssystem mit den in Patentanspruch 1 angegebenen Merkmalen gelöst. Ferner wird diese Aufgabe durch ein Verfahren zum Betrieb eines entsprechenden Steuerungssystems mit den in Patentanspruch 8 aufgezeigten Verfahrensschritten gelöst.

Die Erfindung kann vorteilhaft in Verbindung mit einer Vielzahl unterschiedlicher Steuerungen zur Steuerung industrieller Prozesse, Anlagen oder Maschinen eingesetzt werden. Darunter fallen insbesondere speicherprogrammierbare Steuerungen (SPS) zur Steuerung industrieller Prozesse oder Anlagen sowie numerische Steuerungen (CNC) zur Steuerung von Werkzeugmaschinen, Produktionsmaschinen, Robotern etc. Der Begriff "Steuerung" ist im Zusammenhang mit der Erfindung nicht streng im Sinne der Systemtheorie zu verstehen und umfasst selbstverständlich auch Regeleinrichtungen bzw. Regelungsvorgänge.

Ein erfindungsgemäßes Steuerungssystem sieht neben einer oben genannten realen Steuerung auch eine entsprechende virtuelle Steuerung vor, die das Verhalten der realen Steuerung möglichst exakt nachbildet. Dabei ist es im Zusammenhang mit der Erfindung wichtig, dass in der virtuellen Steuerung alle zur Steuerung des Prozesses, der Anlage oder Maschine relevanten Steuerungsparameter zumindest weitgehend zeitsynchron zu der realen Steuerung vorliegen. Die reale Steuerung bekommt somit einen "virtuellen Zwilling" zur Seite gestellt, der die gleiche Steuerungsaufgabe simulativ und schritthaltend zur realen Steuerung ausführt. Steuerungsaufträge werden sowohl an die reale als auch an die virtuelle Steuerung geschickt und von beiden parallel ausgeführt. Daraus resultiert eine weitestgehende Übereinstimmung der in der realen Steuerung und in der virtuellen Steuerung vorhandenen Daten.

Da an der realen Anlage bzw. Maschine auch Ereignisse auftreten können, die von vorne herein nicht bekannt sind, werden diesbezügliche Informationen bzw. Daten von der realen Steuerung auf die virtuelle Steuerung übertragen. Durch diese Datenübertragung wird die virtuelle Steuerung, die parallel zur realen Steuerung läuft, so gestützt, dass sie die Realität - zumindest bereichsweise - sehr genau nachbildet. Nahezu alle in der realen Steuerung vorliegenden Daten liegen dann auch in der virtuellen Steuerung vor.

Zur Synchronisation der realen Steuerung und der virtuellen Steuerung ist es hilfreich, wenn auch der virtuellen Steuerung die für die Steuerung der Maschine oder Anlage relevanten Sensorsignale zur Verfügung gestellt werden. Darunter fallen beispielsweise Achsstellungen, Drehzahlen oder eine Vielzahl weiterer Sensorsignale, beispielsweise bezüglich Temperatur, Druck, Position etc. Vorzugsweise werden die betreffenden Sensorsignale parallel an die reale und die virtuelle Steuerung gesendet. Es ist aber auch möglich, dass Sensorsignale über die reale Steuerung an die virtuelle Steuerung weitergeleitet werden.

Um den zumindest näherungsweise zeitsynchronen Betrieb der realen Steuerung und der virtuellen Steuerung zu ermöglichen, umfassen die dafür erforderlichen Synchronisationsmittel entsprechend schnelle Datenverbindungen zwischen der realen Steuerung und der virtuellen Steuerung bzw. zwischen der Anlage oder Maschine und der virtuellen Steuerung. Darüber hinaus verfügen die reale und die virtuelle Steuerung auch über eine entsprechende, dem Fachmann hinlänglich bekannte Software zur Sicherstellung der im Zusammenhang mit der Erfindung erforderlichen Synchronität.

Zur Synchronisation der virtuellen Steuerung mit der realen Steuerung werden vorteilhaft zeitbasierte Daten auf die virtuelle Steuerung übertragen. Dadurch kann insbesondere eine zeitsynchrone Abarbeitung eines Steuerprogramms, z.B. eines Teileprogramms einer Werkzeugmaschine, durchgeführt werden. Weiterhin vorteilhaft werden auch zustandsbasierte Daten von der realen Steuerung auf die virtuelle Steuerung übertragen. Zustandsbasierte Daten spiegeln Systemzustände der realen Steuerung, der realen Maschine oder der realen Anlage wider. Darunter fallen insbesondere viele Daten mit Bezug zu Sensorsignalen der in einer Maschine oder Anlage vorhandenen Sensoren. Diese reichen von einfachen Schalterstellungen über Temperatur, Druck, Lage bis hin zu Daten bezüglich Drehzahlen oder Achsstellungen. Durch die Übertragung der entsprechenden Daten lässt sich die gewünschte Synchronität zwischen der realen Steuerung und der virtuellen Steuerung erreichen.

Zur Synchronisation, d.h. Nachführung des virtuellen Systems, werden allerdings nur solche Ereignisse verwendet, die im realen Betrieb auch erwartungsgemäß vorkommen, wie z.B. allmählicher Werkzeugverschleiß oder der planmäßige Tausch von Werkzeugen und Aggregaten.

Vorteilhaft umfasst das erfindungsgemäße Steuerungssystem die zum Zwischenspeichern (Aufzeichnen) der Speicherinhalte und/oder Systemzustände der virtuellen Steuerung erforderlichen Speichermittel. Letztere umfassen neben dem oder den eigentlichen Speicher(n) auch die notwendigen Kommunikationsverbindungen zum Auslesen der Speicher. In der Regel ist es nicht erforderlich, alle Speicherinhalte bzw. Systemzustände über die gesamte, zur Erledigung einer bestimmten Aufgabe (z.B. zur Herstellung eines Werkstücks) erforderliche Betriebszeit aufzuzeichnen. Vielmehr ist es in der Praxis zumeist ausreichend, wenn die betreffenden Daten für einen kurzen Zeitraum (z.B. 15 Minuten) vor einem Ausfall oder einer Störung bzw. zum Zeitpunkt des Ausfalls oder der Störung vorliegen und in diesem Zustand "eingefroren", das heißt persistent gespeichert werden. Dies reduziert das zu speichernde Datenvolumen erheblich.

Selbstverständlich ist es erforderlich, die gespeicherten Daten im Bedarfsfall wieder aus dem Zwischenspeicher auslesen und auf die störungsbehaftete (ggf. nach einer Reparatur) bzw. eine Ersatzsteuerung (weitere reale Steuerung) übertragen zu können. Auch dazu sind entsprechende Kommunikationsverbindungen und eine geeignete Software erforderlich.

Nach der Datenübertragung kann die "reparierte" erste reale Steuerung bzw. die Ersatzsteuerung (weitere reale Steuerung) ohne großen zeitlichen Verzug die Steuerungsfunktion wieder aufnehmen und zwar dort, wo die Unterbrechung durch den Ausfall bzw. die Störung stattgefunden hat. Der zeitliche Verzug durch den Ausfall bzw. die Störung beschränkt sich daher auf ein Minimum.

Die virtuelle Steuerung, der "virtuelle Zwilling", hat infolge der Synchronisation zu jedem Zeitpunkt den gleichen Zustand wie die reale Steuerung selbst, also auch die gleichen Speicher- bzw. "Gedächtnis-" Inhalte. Ebenso wie die reale Steuerung weiß sie zu jedem Zeitpunkt, wo die reale Maschine steht. Fällt die reale Steuerung aus, muss lediglich der virtuelle Zwilling angehalten werden und sein Zustand auf die Ersatzsteuerung übertragen werden. Die Ersatzsteuerung ist dadurch sofort wieder synchron mit der realen Maschine. Der Produktionsstillstand beschränkt sich auf den Zeitraum, den man benötigt, die Ersatzsteuerung einzubauen bzw. die Steuerung zu reparieren und die zwischengespeicherten Daten einzulesen. Gegebenenfalls müssen durch den Ausfall verunglückte Werkstücke noch entfernt werden.

Ausfallzeiten nach einem Ausfall der (realen) Maschinensteuerung und dem damit verbundenen Verlust ihres Gedächtnisinhalts werden deutlich reduziert. Das Wiederanfahren der Produktion wird deutlich vereinfacht und weniger fehlerträchtig. Besondere Hardware-Maßnahmen, um Gedächtnis-Inhalte aus einer ausgefallenen Steuerung zu retten, z.B. durch Umstecken von (Daten-) Speichern, sind nicht erforderlich. Unsicherheiten, ob diese Inhalte überhaupt noch korrekt sind oder im Zuge des Ausfalls beschädigt oder nur teilweise gespeichert wurden, werden vermieden.

Gegenüber einer permanenten Aufzeichnung aller Speicherinhalte/Systemzustände direkt aus der realen Steuerung bietet die Erfindung den Vorteil, dass dadurch die reale Steuerung nicht durch eine Datenaufzeichnung zusätzlich belastet wird. Bei der virtuellen Steuerung fällt diese zusätzliche Belastung kaum ins Gewicht, da bei dieser durch Bereitstellung der entsprechenden Hardware viel einfacher und kostengünstiger auf diese zusätzliche Belastung reagiert werden kann.

Bei einer bevorzugten Ausführungsform der Erfindung erkennt das Steuerungssystem selbst, ob eine Störung oder gar ein Ausfall der realen Steuerung vorliegt. Die dafür erforderlichen Mittel zum automatischen Erkennen eines Ausfalls oder einer Störung umfassen vorteilhaft eine Steuerungsüberwachungseinrichtung zum Erfassen von Daten der realen Steuerung und der virtuellen Steuerung, wobei die Steuerungsüberwachungseinrichtung zum Vergleich der von der realen Steuerung erfassten oder daraus hervorgehender Daten mit den von der virtuellen Steuerung erfassten oder daraus hervorgehender Daten ausgebildet ist und wobei aus dem Vergleich eine Störung oder ein Ausfall der realen Steuerung erkennbar ist. Eine Störung oder ein Ausfall werden insbesondere dann erkannt, wenn entweder aus der realen Steuerung überhaupt keine Daten mehr auslesbar sind oder wenn die aus der realen Steuerung gewonnenen Daten plötzlich grob von den aus der virtuellen Steuerung stammenden Daten abweichen. Liegt ein derartiger Zustand vor, so wird das Steuerungssystem in einen dafür vorgesehenen Störungsmodus (Referenzzustand) überführt und eine Fehler- bzw. Alarmmeldung generiert.

Eine Ausführungsform der Erfindung sieht vor, dass die Speicherinhalte bzw. Systemzustände der virtuellen Steuerung für den Zeitpunkt "eingefroren", das heißt (permanent) zwischengespeichert werden, zu dem der Ausfall bzw. die Störung detektiert wurde. Dies ist beispielsweise dadurch möglich, dass die Steuerfunktion der virtuellen Steuerung bei einem erkannten Ausfall der realen Steuerung gestoppt wird. Es ist aber auch möglich, dass (auch) weiter zurückliegende Speicherinhalte bzw. Systemzustände erhalten (gespeichert) bleiben. Die entsprechenden Daten werden dann vorteilhaft mit einem Zeitstempel versehen, um eine zeitliche Zuordnung zu ermöglichen. Evtl. machen sich Fehler in einer Steuerung bereits einige Zeit vor einem Totalausfall bemerkbar. Dann kann auch auf Basis weiter zurückliegender Daten das System neu aufgesetzt werden.

Insbesondere bei der Aufzeichnung von Speicherinhalten/Systemzuständen über einen längeren Zeitraum ist es von Vorteil, wenn die betreffenden Daten nicht zu periodischen Zeitpunkten ausgelesen und gespeichert werden, sondern nur dann, wenn sich an einem bestimmten Datum etwas ändert. In Verbindung mit den o.g. Zeitstempeln, die den Zeitpunkt der letzten Änderung des betreffenden Datums festhalten, lässt sich auch so für einen bestimmten Zeitpunkt ein komplettes Abbild der Speicherinhalte/Systemzustände gewinnen und das erzeugte Datenvolumen deutlich reduzieren.

Das gesamte Steuerungssystem kann hardwaremäßig auf einer einzigen Rechnereinheit implementiert sein. Vorzugsweise ist das Steuerungssystem jedoch auf zwei oder mehrere Rechnereinheiten verteilt, z.B. indem sowohl die reale Steuerung als auch die virtuelle Steuerung auf getrennten Rechnereinheiten ablaufen. Diese Rechnereinheiten sind über entsprechende Kommunikationseinrichtungen, insbesondere Datennetze, miteinander verbunden.

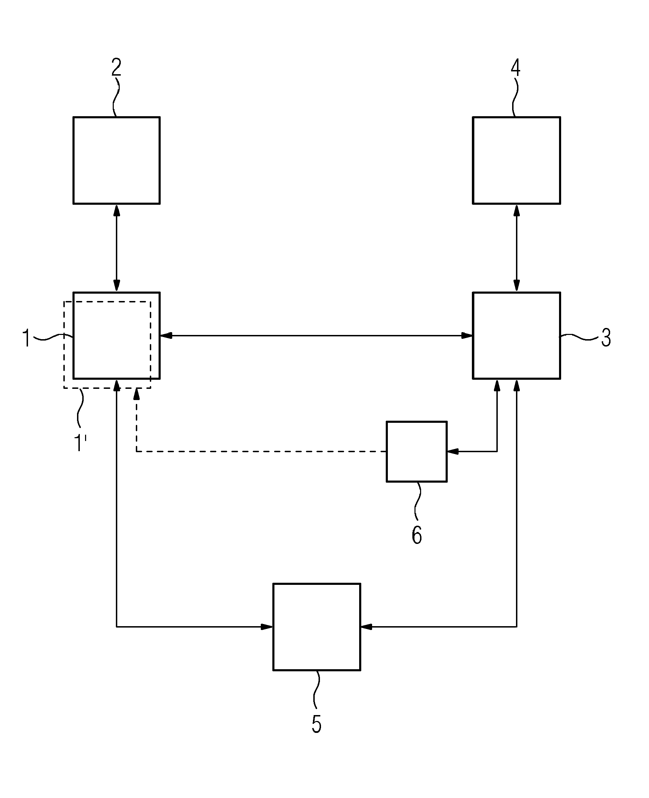

Die Erfindung wird nachfolgend anhand eines Ausführungsbeispiels näher erläutert. Dabei zeigt die Figur in stark vereinfachter und schematisierter Darstellung eine reale Steuerung 1 zur Steuerung einer realen Werkzeugmaschine 2. Vorteilhaft ist die reale Steuerung 1 als Computerized Numerical Control (CNC) ausgebildet. Die CNC steuert die Werkzeugmaschine 2 zur Herstellung eines Werkstücks.

Erfindungsgemäß ist neben der realen Steuerung 1 eine virtuelle Steuerung 3 vorhanden, die vorteilhaft auf einer Standard-Hardware (z.B. in Form eines Standard PCs) aufsetzt und die Funktion der realen Steuerung 1 weitestgehend simuliert. Insbesondere führt die virtuelle Steuerung 3 das gleiche Teileprogramm aus wie die reale Steuerung 1. Zur Synchronisation der beiden Steuerungen ist eine Datenverbindung zwischen der realen Steuerung 1 und der virtuellen Steuerung 3 vorhanden. Mittels der so übertragenen Daten können beispielsweise Ereignisse an der realen Maschine 2 mittels der Steuerung 1 erfasst und auf die virtuelle Steuerung 3 übertragen werden, so dass zur Gewährleistung der Synchronität zwischen der realen Steuerung 1 und der virtuellen Steuerung 3 auch reale Maschinendaten von der virtuellen Steuerung 3 berücksichtigt werden. Weiterhin umfasst das erfindungsgemäße Steuerungssystem auch eine virtuelle Maschine 4, durch die das Verhalten der realen Maschine 2 möglichst realitätsnah simuliert werden kann.

Da an der realen Maschine 2 auch Ereignisse auftreten können, die von vorne herein nicht bekannt sind, werden insbesondere diesbezügliche Informationen bzw. Daten von der realen Steuerung 1 auf die virtuelle Steuerung 3 übertragen. Durch diese Datenübertragung wird die virtuelle Steuerung 3 so gestützt, dass sie die Realität sehr genau nachbildet. Nahezu alle in der realen Steuerung 1 vorliegenden Daten liegen dann auch in der virtuellen Steuerung 3 vor.

Zur Simulation der realen Steuerung 1 mittels der virtuellen Steuerung 3 werden vorzugsweise auch der virtuellen Steuerung 3 die zur Steuerung der realen Werkzeugmaschine 2 relevanten Sensorsignale zur Verfügung gestellt. Darunter fallen beispielsweise Achsstellungen oder Drehzahlen. Vorteilhaft werden die betreffenden Sensorsignale parallel an die reale Steuerung 1 und die virtuelle Steuerung 3 gesendet. Es ist aber auch möglich, dass Sensorsignale über die reale Steuerung 1 an die virtuelle Steuerung 3 weitergeleitet werden.

Um den zumindest näherungsweise zeitsynchronen Betrieb der realen Steuerung 1 und der virtuellen Steuerung 3 zu ermöglichen, sind entsprechende, an sich bekannte Synchronisationsmittel vorhanden. Diese umfassen neben der erforderlichen schnellen Datenverbindung zwischen der realen Steuerung 1 und der virtuellen Steuerung 3 auch eine entsprechende Software zur Sicherstellung der im Zusammenhang mit der Erfindung erforderlichen Synchronität.

Zur Synchronisation, d.h. Nachführung des virtuellen Systems, werden vorzugsweise nur solche Ereignisse verwendet, die im realen Betrieb auch erwartungsgemäß vorkommen, wie z.B. allmählicher Werkzeugverschleiß oder der planmäßige Tausch von Werkzeugen und Aggregaten. Dadurch wird verhindert, dass sich Störungen bei der realen Steuerung auf die virtuelle Steuerung übertragen.

Vorteilhaft umfasst das erfindungsgemäße Steuerungssystem eine Steuerungsüberwachungseinrichtung 5 zum Erfassen von Daten, insb. Betriebsdaten, der realen Steuerung 1 und der virtuellen Steuerung 3, wobei die Steuerungsüberwachungseinrichtung 5 die von der realen Steuerung 1 stammenden oder daraus hervorgehenden Daten und die von der virtuellen Steuerung 3 stammenden oder daraus hervorgehenden Daten analysiert, insbesondere vergleicht, und wobei anhand des Analyseergebnisses eine Störung oder ein Ausfall der realen Steuerung 1 automatisch erkennbar ist. Eine Störung oder ein Ausfall können sich beispielsweise dadurch bemerkbar machen, dass keine Daten aus der realen Steuerung 1 auslesbar sind oder anhand des Analyseergebnisses in der Steuerungsüberwachungseinrichtung 5 eine plötzliche, grobe Abweichung der ausgeführten Steuerfunktionen im Vergleich zueinander festgestellt wird. Dann bewirkt die Steuerungsüberwachungseinrichtung 5, dass die reale Maschine 2 sofort in einen eigens für diesen Fall vorgesehenen Störungsmodus (Referenzzustand) überführt wird und das "Gedächtnis" der virtuellen Steuerung 3, das heißt alle relevanten Speicherinhalte und Systemzustände der virtuellen Steuerung 3 "eingefroren", also zumindest für eine bestimmte Zeitdauer persistent gespeichert werden. Ferner wird eine Fehlermeldung und/oder ein Alarm an eine übergeordnete Leitstelle abgegeben. Im Ausführungsbeispiel ist zum zwischenspeichern der Speicherinhalte der Speicher 6 vorgesehen. Dieser kann als Zwischenspeicher real vorhanden sein, es kann sich dabei aber auch um den bzw. die "virtuellen Speicher" der virtuellen Steuerung 3 handeln, der bzw. die den bzw. die realen Speicher der realen Steuerung 1 hinsichtlich Größe, Adressraum etc. realitätsnah nachbilden.

Üblicherweise wird sich an die Fehlermeldung eine Fehleranalyse durch das Bedienpersonal anschließen. Entweder die reale Steuerung 1 kann wieder in Betrieb gesetzt werden, evtl. nach einem Reset oder einer Reparatur, oder sie wird durch eine reale Steuerung 1' (Ersatzsteuerung) ersetzt, die vorzugsweise in ihrer Bauart mit der realen Steuerung 1 übereinstimmt.

Damit die reale Steuerung 1 bzw. die reale Steuerung 1' den Betrieb der Werkzeugmaschine 2 möglichst schnell wieder aufnehmen kann, werden - mittels geeigneter Hard- und Software - die in dem Speicher 6 zwischengespeicherten Speicherinhalte bzw. Systemzustände in den bzw. die dafür vorgesehenen Speicher der realen Steuerung 1 bzw. der realen Steuerung 1' übertragen. Es wird damit sozusagen das "Gedächtnis" der virtuellen Steuerung 3 auf die reparierte reale Steuerung 1 bzw. die neue reale Steuerung 1' übertragen. Hierfür wird entweder der betreffende Speicherinhalt des Speichers 6 direkt auf die reparierte reale Steuerung 1 bzw. die neue reale Steuerung 1' übertragen (strichlierter Pfeil) oder die Datenübertragung erfolgt über die ohnehin vorhandene Verbindung zwischen der virtuellen Steuerung 3 und der reparierten realen Steuerung 1 bzw. der neuen realen Steuerung 1'.

Vorteilhaft werden die Speicherinhalte und/oder Systemzustände der virtuellen Steuerung über einen längeren Zeitraum (im Bereich von Minuten bis Stunden) aufgezeichnet und jeweils mit einem Zeitstempel versehen, so dass nicht nur die Daten zum Zeitpunkt des Ausfalls oder der Störung vorliegen, sondern auch Daten vor diesem Zeitpunkt. Das System kann dann auch für einen weiter in der Vergangenheit liegenden Zeitpunkt neu aufgesetzt werden.

## Patentansprüche

1. Steuerungssystem (1, 3), umfassend
- eine erste reale Steuerung (1) zur Steuerung eines industriellen Prozesses, einer Anlage oder einer Maschine,
- eine virtuelle Steuerung (3) zur Simulation der Steuerung des industriellen Prozesses, der Anlage oder der Maschine,
- Synchronisationsmittel zur Synchronisation der ersten realen Steuerung (1) und der virtuellen Steuerung (3),
- Speichermittel (6) zum Speichern von Speicherinhalten und/oder Systemzuständen der virtuellen Steuerung (3),
- Mittel zum Übertragen der zwischengespeicherten Speicherinhalte und/oder Systemzustände zu der ersten (1) oder einer weiteren realen Steuerung (1'),
- Betrieb der ersten (1) oder der weiteren realen Steuerung (1') unter Berücksichtigung der übertragenen Speicherinhalte und/oder Systemzustände.

2. Steuerungssystem (1, 3) nach Anspruch 1, wobei die erste reale Steuerung (1) durch die weitere reale Steuerung (1') ersetzbar ist.

3. Steuerungssystem (1, 3) nach Anspruch 1 oder 2, umfassend Mittel zum automatischen Erkennen eines Ausfalls oder einer Störung der ersten realen Steuerung (1).

4. Steuerungssystem (1, 3) nach einem der vorherigen Ansprüche, wobei die zwischengespeicherten Speicherinhalte und/oder Systemzustände mit einem Zeitstempel versehbar sind.

5. Steuerungssystem (1, 3) nach Anspruch 4, wobei Änderungen einzelner Speicherinhalte und/oder Systemzustände erkennbar sind und nach einer bestimmten Speicherung des jeweiligen Speicherinhalts und/oder Systemzustandes eine erneute Speicherung nur erfolgt, nachdem eine Änderung erkannt wurde.

6. Steuerungssystem (1, 3) nach einem der vorherigen Ansprüche, wobei die reale Steuerung (1) als CNC zur Steuerung einer realen Werkzeugmaschine ausgebildet ist.

7. Steuerungssystem (1, 3) nach einem der vorherigen Ansprüche, wobei die reale Steuerung (1) mit einer realen Maschine (2) oder Anlage verbunden ist und die virtuelle Steuerung (3) mit einer virtuellen Maschine (4) oder Anlage verbunden ist.

8. Verfahren zum Betrieb eines Steuerungssystems (1, 3), wobei
- ein industrieller Prozess, eine Anlage oder eine Maschine von einer ersten realen Steuerung (1) gesteuert wird,
- die Steuerung des industriellen Prozesses, der Anlage oder der Maschine von einer virtuellen Steuerung (3) simuliert wird,
- die erste reale Steuerung (1) und die virtuelle Steuerung (3) synchronisiert werden,
- Speicherinhalten und/oder Systemzuständen der virtuellen Steuerung (3) zwischengespeichert werden,
- die zwischengespeicherten Speicherinhalte und/oder Systemzustände zu der ersten (1) oder einer weiteren realen Steuerung (1') übertragen werden,
- die erste (1) oder die weitere reale Steuerung (1') unter Berücksichtigung der übertragenen Speicherinhalte und/oder Systemzustände betrieben wird.

9. Verfahren zum Betrieb eines Steuerungssystems (1, 3) nach Anspruch 8, wobei die erste reale Steuerung (1) durch die weitere reale Steuerung (1') ersetzt wird.

10. Verfahren zum Betrieb eines Steuerungssystems (1, 3) nach Anspruch 8 oder 9, wobei ein Ausfall oder eine Störung der ersten realen Steuerung (1) automatisch erkannt wird.

11. Verfahren zum Betrieb eines Steuerungssystems (1, 3) nach einem der Ansprüche 8 bis 10, wobei die zwischengespeicherten Speicherinhalte und/oder Systemzustände mit einem Zeitstempel versehen werden.

12. Verfahren zum Betrieb eines Steuerungssystems (1, 3) nach einem der Ansprüche 8 bis 11, wobei Änderungen einzelner Speicherinhalte und/oder Systemzustände erkennbar sind und nach einer bestimmten Speicherung des jeweiligen Speicherinhalts und/oder Systemzustandes eine erneute Speicherung nur erfolgt, nachdem eine Änderung erkannt wurde.
